# EUROPEAN PATENT APPLICATION

(11) **EP 1 578 131 A1**
(43) Date of publication of application: **21.09.2005**
(21) Application number: 04006491.7
(22) Date of filing: 18.03.2004
(51) Int. Cl.: H04N 7/24, H04N 7/26, H04N 7/64

(54) **Encoding/decoding methods and systems, computer program products therefor**

(71) Applicant: STMicroelectronics S.r.l., 20041 Agrate Brianza (Milano) (IT)
(72) Inventor: Rovati, Fabrizio Simone, 20092 Cinisello Balsamo (Milano) (IT); Della Torre, Luigi, 20035 Lissone (Milano) (IT); Celetto, Luca, 33100 Udine (IT); Vitali, Andrea Lorenzo, 24123 Bergamo (IT)
(74) Representative: Bosotti, Luciano

(57) **Abstract**

A method for encoding/decoding a video signal sequence by generating therefrom multiple description subsequences wherein said subsequences are produced by a plurality of parallel video encoding processes (102) based on respective encoding parameters. The method includes the step of commonly controlling (103) said encoding/decoding parameters for said plurality of video encoding/decoding processes (102).

## Description

### Field of the Invention

The present invention relates to coding techniques, for instance for video signals.

### Description of the related art

The goal of Multiple Description Coding (as described e.g. in V.K. Goyal "Multiple Description Coding: Compression Meets the Network" IEEE Signal Proc. Mag. Sept. 2001 pp. 74-93, is to create several independent bitstreams using an existing video codec (i.e, coder-decoder). Bitstreams can be decoded independently or jointly. The larger the number of the bitstreams decoded, the larger the quality of the output video signal.

Multiple Description Coding (MDC) requires a pre-processing stage upstream of the encoder, in order to split the video sequence and control redundancy among subsequences. It also requires a post-processing stage downstream of the decoder, in order to merge the received and successfully decoded substreams.

Multiple Description Coding greatly improves error resiliency, because each bitstream can be decoded independently. Also, variable bandwidth/throughput requirements can be managed by transmitting a suitable number of descriptions. However, coding efficiency is somewhat reduced depending on the amount of redundancy left among subsequences.

Multiple Description Coding is essentially analogous to Scalable Coding (also known as Layered Coding). The difference lies in the dependency among bitstreams. The simplest case is when two bitstreams are created. In the case of scalable coding they are referred to as "base layer" and "enhancement layer", respectively. The latter layer depends on the former layer and cannot be decoded independently therefrom. On the other hand, in the case of Multiple Description Coding, each description can be individually decoded to get a base quality video. As for Scalable Coding, there can be spatial, temporal or SNR (Signal-to-Noise Ratio) Multiple Descriptions (MD).

Replicated headers/syntax and replicated motion vectors among bitstreams greatly impede coding efficiency in SNR MD. Replicated headers/syntax also hinder temporal MD, and motion compensation is less effective because of the increased temporal distance between frames. Spatial MD is hindered by headers/syntax as well. However, contrary to temporal MD, motion compensation is not affected, particularly when 8x8 blocks are split into smaller blocks, as in the latest H.264 codec. Because of this, spatial MD Coding is usually regarded as the best choice for video coding.

The underlying video codec can be either one of the traditional solutions based on DCT (Discrete Cosine Transform) transform and motion compensation (e.g. MPEG-x, H.26x), or one of the more recent codec based on the wavelet 3D transform (e.g. SPHIT).

The H.264 codec is particularly promising because of its increased coding efficiency, which helps compensate for the losses due to replicated headers/syntax overhead. The multimode prediction (up to four motion vectors per 8x8 block) is expected to assist with Spatial MD.

The topics considered in the foregoing form the subject of extensive technical literature, as witnessed e.g. by:
- P. C. Cosman, R. M. Gray, M. Vetterli, "Vector Quantization of Image Subbands: a Survey", September 1995;
- Robert Swann, "MPEG-2 Video Coding over Noisy Channels", Signal Processing and Communication Lab, University of Cambridge, March 1998;
- Robert M. Gray "Quantization", IEEE Transactions on Information Theory, vol. 44, n.6, October 1998;
- Vivek K. Goyal, "Beyond Traditional Transform Coding", University of California, Berkeley, Fall 1998;
- Jelena Kovacevic, Vivek K. Goyal, "Multiple Descriptions - Source-Channel Coding Methods for Communications", Bell Labs, Innovation for Lucent Technologies, 1998;
- Jelena Kovacevic, Vivek K. Goyal, Ramon Arean, Martin Vetterli, "Multiple Description Transform Coding of Images", Proceedings of IEEE Conf. on Image Proc., Chicago, October 1998;
- Sergio Daniel Servetto, "Compression and Reliable Transmission of Digital Image and Video Signals", University of Illinois at Urbana-Champaign, 1999;
- Benjamin W. Wah, Xiao Su, Dong Lin, "A survey of error-concealment schemes for real-time audio and video transmission over internet". Proceedings of IEEE International Symposium on Multimedia Software Engineering, December 2000;
- John Apostolopoulos, Susie Wee, "Unbalanced Multiple Description Video Communication using Path Diversity", IEEE International Conference on Image Processing (ICIP), Thessaloniki, Greece, October 2001;
- John Apostolopoulos, Wai-Tian Tan, Suise Wee, Gregory W. Womell, "Modeling Path Diversity for Multiple Description Video Communication", ICASSP, May 2002;
- John Apostolopoulos, Tina Wong, Wai-Tian Tan, Susie Wee, "On Multiple Description Streaming with Content Delivery Networks", HP Labs, Palo Alto, February 2002;
- John Apostolopoulos, Wai-Tian Tan, Susie J. Wee, "Video Streaming: Concepts, Algorithms and Systems", HP Labs, Palo Alto, September 2002.

### Object and summary of the invention

The object of the invention is to more efficiently exploit the error resiliency already present in video bitstreams generated by compressing multiple descriptions with standard video encoders. More specifically, the object of the invention is to enhance the robustness and the error concealment capabilities of standard video decoders when used to decode multiple description bitstreams.

According to the present invention, that object is achieved by means of encoding/decoding methods having the features set forth in the claims that follow. The invention also relates to corresponding systems as well as related computer program products, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

A general common concept of the arrangements described herein is thus encoding/decoding the multiple descriptions simultaneously, in a joint/coordinated manner by commonly controlling the encoding/decoding parameters used by several independent encoders/decoders or several encoders/decoders connected therebetween or using a single architecture adapted to manage multiple inputs/outputs.

An embodiment of the invention is thus a method for encoding a video signal sequence by generating therefrom multiple description subsequences. The subsequences are produced by a plurality of parallel video encoding processes based on respective encoding parameters, and the method includes the step of commonly controlling the encoding parameters for the plurality of video encoding processes. The parameters may preferably include a target bitrate, group of picture (GOP) structures, or a slice partitioning.

The subsequences may also be produced by a plurality of parallel independent video encoding processes or by multiple parallel dependent video encoding processes. To advantage, dependency among the multiple parallel dependent encoding processes can be produced by at least one of data sharing and signaling (e.g. via selection- of anchor frames or motion vectors).

The possibility also exists of applying a prediction mode to the video signal subject to encoding by using prediction weights. Dependency among the multiple parallel dependent encoding processes is thus created by globally controlling the prediction weights for the multiple description subsequences.

Preferably, the method involves providing one custom video encoder able to accept the video sequence as its input and generate said subsequences as multiple description bitstreams conformant to a video standard.

A particularly preferred embodiment includes performing motion compensation on the whole of the video sequence, thus generating motion vectors and the step of refining and adapting said motion vectors for encoding each subsequence.

The preferred features previously highlighted in connection with the encoding process(es) can be extended, as the case may be, to corresponding, complementary decoding process(es).

The arrangement(s) described herein are adapted to be implemented either by resorting to dedicated processors or in the form of suitably programmed general purpose processors. The invention thus encompasses any computer program product loadable in the memory of at least one computer and including software code portions for performing a method according to the invention when the product is run on a computer.

### Brief description of the drawings

The invention will now be described, by way of example only, by referring to the enclosed figures of drawing, wherein:
- Figure 1 is a block diagram of an exemplary encoding-decoding system;
- Figure 2 is a block diagram of a video encoder;
- Figure 3 is block diagram of a video decoder;
- Figure 4 is exemplary of picture partitioning within the framework of the arrangement described herein;
- Figure 5 is example of possible display and coding order of video frames within the framework of the arrangement described herein;
- Figure 6 shows an exemplary trade-off between Intra period and FEC rate under various conditions within the framework of the arrangement described herein; and
- Figure 7 shows exemplary synchronized and interleaved non-predicted anchor frames within the framework of the arrangement described herein.

### Detailed description of preferred embodiments of the invention

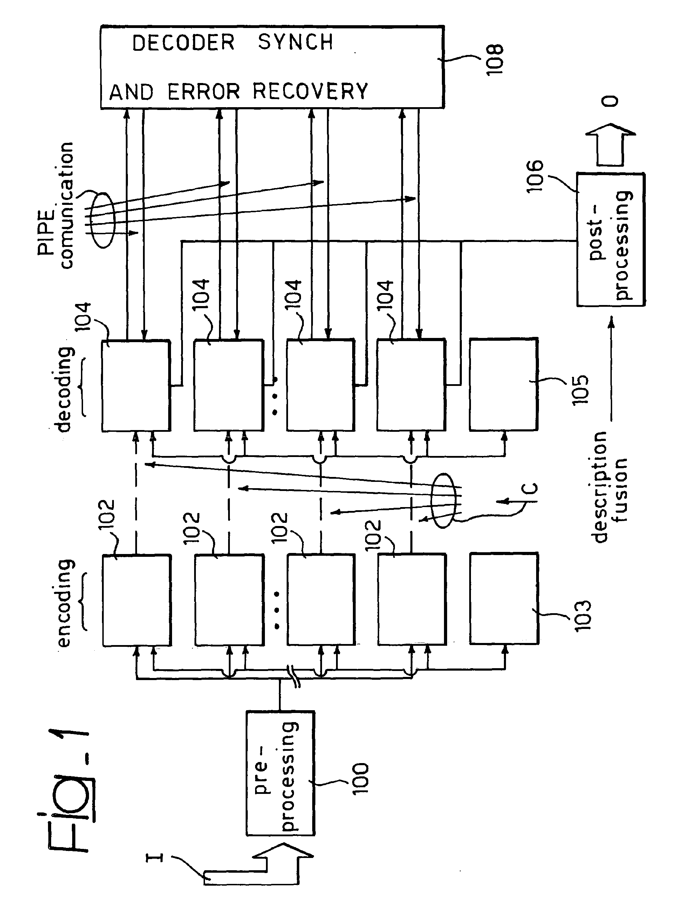

Figure 1 shows a block diagram of an encoding/decoding system adapted to operate according to the invention.

There, reference I indicates an input video sequence comprised of a digital video signal to be transmitted. The input signal I is fed to a pre-processing block 100 that creates a multiple descriptions by way of spatial sub-sampling. This may occur based on any of the prior art techniques described in the introductory portion of the description.

The subsequences from the pre-processing block 100 are fed to a set of N encoder blocks, each indicated 102.

Any known standard video encoder type can be selected among those commonly used in the art of video coding such as e.g. MPEG-2, MPEG-4, H.263, H.263+. A particularly preferred choice is a H.264 encoder. A general discussion of these encoders (and the corresponding decoders) can be found e.g. in: Iain E. G. Richardson "H.264 & MPEG-4 Video Compression, video coding for next-generation multimedia", Wiley 2003 or Barry G. Haskell, Atul Puri and Arun N.Netravali "Digital Video: an introduction to MPEG-2" Kluwer Academic Publisher Boston-Dordrecht-London 1997.

Specifically, various schemes exist such as e.g. overlapping quantization (MDSQ or MDVQ), correlated predictors, overlapped orthogonal transforms, correlating linear transforms (MDTC, e.g. PCT or pairwise correlating transform for 2 MD), correlating filter banks, interleaved spatial-temporal sampling (e.g. video redundancy coding in H.263/H.263+), spatial-temporal polyphase downsampling (PDMD), domain based partitioning (in the signal domain or in a transform domain), FEC (Forward Error Correction) based MDC (e.g. using Reed-Solomon codes).

A simple scheme for SNR MD is coding of independent video flows created by means of MD quantizers, either scalar or vector (MDSQ, MDVQ). The structure of the MD quantizer controls redundancy.

A simple scheme for spatial/temporal MD is coding of independent video flows created by means of spatial or temporal polyphase downsampling (PDMD). A programmable spatial or temporal low-pass filter controls redundancy.

As an example, temporal MD can be achieved by separating odd and even frames, creating two subsequences. Alternatively, odd and even fields can be separated. Spatial MD is achieved by separating pixels of 2x1 blocks, so that two subsequences are created. Alternatively four subsequences can be created by separating pixels in 2x2 blocks. The two techniques can be combined. Unlike temporal MD, spatial MD requires careful processing to avoid color artifacts caused by downsampled chroma formats and field interlacing. Each subsequence is then fed into a standard video encoder.

The encoder signals from the encoder blocks 102 are sent over a transmission channel C to the receiver side. On the receiver side a set of N H.264 decoder blocks are provided, each indicated 104.

The output signals of the decoder blocks 104 are fed to a synchronization block 108 and the signals from this block are sent to the decoder blocks. The synchronization block 108 is also able to effect error recovery.

The output signals from the decoder blocks 104 are also fed to a post-processing block 106 that merge the multiple descriptions. The output of the post-processing block 106 is the output sequence O.

Conventional video encoders are usually comprised of four stages: prediction (to exploit spatial/temporal redundancy), transform (to exploit spatial redundancy), quantization (to reduce perceptual irrelevancy), entropic coding (to reduce mathematical redundancy).

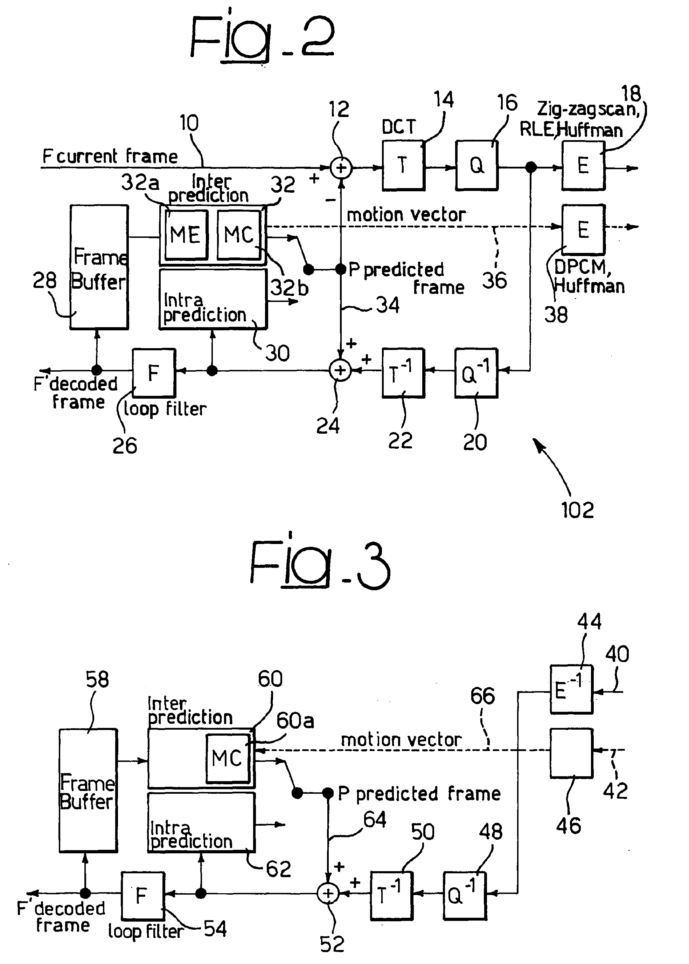

Specifically, Figure 2 shows a block diagram of a H.264 video encoder, as indicated 102 in Figure 1.

There, reference numeral 10 indicates an input line over which the "current" frame F is received and input to a summation (subs-traction) node 12. The signal from the summation node 12 is fed to a DCT (Discrete Cosine Transform) block 14 to be subsequently quantized in a quantizer block 16. The quantized signal from the block 16 is fed to further processing blocks (zig-zag scan, RLE and Huffman coding, and so on) collectively indicated 18.

The quantized signal from the block 16 is also sent to an inverse-quantizer block 20, and a cascaded inverse DCT (IDCT) block 22 to be then fed to a further summation node 24.

The output signal from the summation node 24 is fed to a loop filter 26 that generates a "decoded" frame F'.

The signal corresponding to the decoded frame is in turn fed to a frame buffer 28, while the input signal to the loop filter 26 (from the summation node 24) is fed to an "Intra" prediction block 30.

Reference 32 designates an "Inter" prediction block comprised of Motion Estimation (ME) and Motion Compensation (MC) sub-blocks designated 32a and 32b, respectively.

A line 34 is used to feed predicted P frames to the summation nodes 12 and 24 taken from either block 30 or 32. Summation in the node 12 is with negative sign.

Reference 36 indicates a further line used to forward motion vectors from the prediction module designated 32 to processing stages (DPCM, Huffman, and so on) collectively designated 38.

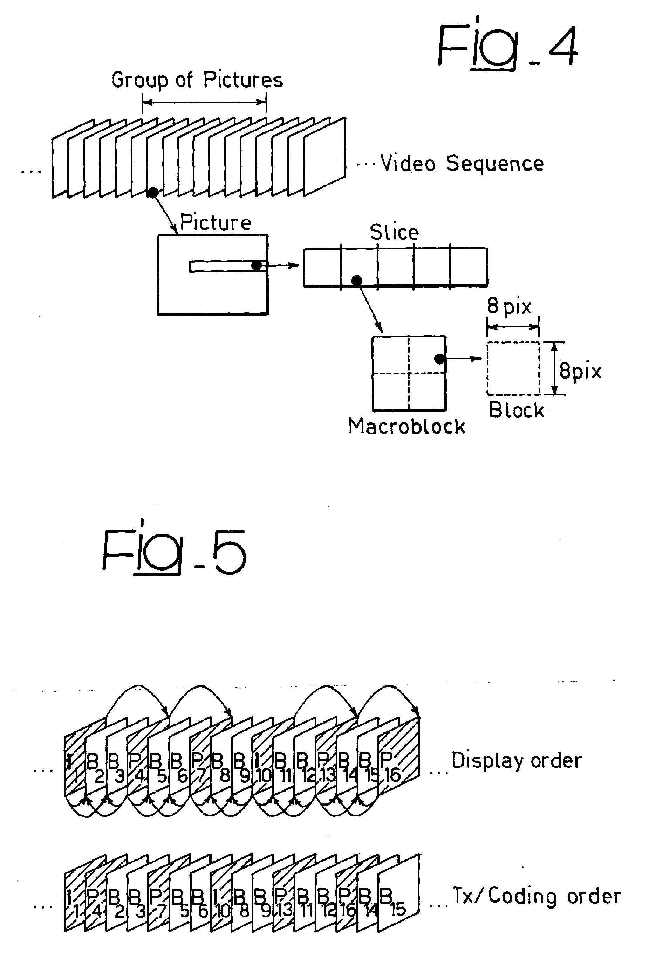

Figure 3 shows instead a block diagram of a H.264 video decoder, as indicated 104 in Figure 1.

There, reference numeral 40 indicates an input line over which the encoded signal is received and input to an inverse processing block 44, and then on to an inverse-quantizer block 48 and a cascaded inverse DCT block 50, to be then fed to a summation node 52.

The output signal from the summation node 52 is fed to a loop filter 54 that generates a "decoded" frame F'.

The signal corresponding to the decoded frame is also fed to a frame buffer 58, while the input signal to the loop filter 54 (from the summation node 52) is fed to an "Intra" prediction block 62.

Reference 60 designates an "Inter" prediction block comprised of Motion Compensation (MC) sub-block designated 60a.

A line 64 is used to feed to the summation node 52 P predicted frames taken from either blocks 60 or 62.

Finally, reference 66 indicates a further line used to forward motion vectors from inverse processing stages (DPCM, Huffman,...)collectively designated 46, to the prediction module 60.

All of the foregoing corresponds to well known concepts in the art thus making it unnecessary to provide a detailed description herein.

Consequently, in its simplest form, encoding of N descriptions (also known as subsequences) is done by means of N parallel and independent standard video encoders. In the arrangement described herein, each encoder 102 though independent is driven by a common controller 103 able to tune the encoding parameters (e.g. target bitrate, GOP structure, slice partitioning) used in the encoders 102.

As an alternative (not explicitly shown since the basic architecture is essentially similar), instead of using multiple parallel and independent video encoders 102, one "simultaneous" encoder can be used. The simultaneous encoder can be easily implemented as multiple parallel but dependent video encoders, where the dependency is a consequence of data sharing and signalling (e.g. anchor frame selection, motion vectors, intra/inter prediction modes, etc...).

Simultaneous encoding may be preferable as several optimizations become possible in order to reduce the complexity of the encoding process (e.g. motion estimation can be done once and for all). As a side effect, the global coding efficiency can also be enhanced (e.g. as happens for R-D optimization in H.264).

In its simplest form, decoding of N compressed descriptions (also known as substreams) as transmitted over the channel C is performed by means of N parallel and independent standard video decoders 104. Again, though independent, the video decoders 104 are driven by a controller 105 able to tune decoding parameters (e.g. concealment algorithms) of each video decoder 104.

There again, as is the case mentioned previously for the decoder 102, instead of using multiple parallel and independent video decoders, one simultaneous decoder can be used. The simultaneous decoder can be easily implemented as multiple parallel but dependent video decoders, where the dependency is a consequence of data sharing and signalling (e.g. anchor frames, motion vectors, etc...) .

Again, simultaneous decoding may be preferable as several optimizations become possible in order to enhance the robustness of the decoding process (e.g. lost anchor frames can be estimated from other decoded descriptions). As a side effect, the error concealment can be made easier.

By the point of view of error resiliency, prediction makes the compressed bitstream very sensitive to errors. In fact, if any reference data block (e.g. anchor frames for motion compensation) is corrupted, the error will propagate to neighboring or subsequent blocks, depending on the prediction type (spatial or temporal). Propagation of errors is stopped when prediction is not used, i.e. when data blocks are compressed independently (e.g. intra macroblocks, not spatially predicted).

As a consequence, the error resiliency of a compressed bitstream can be increased simply by reducing the amount of prediction. As an example: the rate of intra pictures can be increased. The price to be paid is a reduced coding efficiency, i.e. a higher bitrate for the same quality or a lower quality for the same bitrate.

The error resiliency of the compressed bitstream can also be increased by adding controlled redundancy to let the decoder detect and correct some or all of the errors. An example: Forward Error Correction codes (FEC) can be used, such as Reed-Solomon codes or Turbo codes. Again, the price to be paid is an increase in the bitrate due to the added FEC or a lower quality due to the reduced bit-budget available for the compressed video.

When an error-prone channel is used to transmit the compressed bitstream, the error resiliency must be increased so that an acceptable quality is guaranteed at the decoder side. Increasing the resiliency by means of the source encoder (e.g. increasing the Intra rate) is not however the same as increasing the resiliency by means of the channel encoder (e.g. decreasing the code rate).

In fact, FEC codes are effective only against randomly distributed errors (if errors are likely to be correlated, an interleaver must be used with FEC codes). Conversely, compressed video is sensitive to randomly distributed errors, while being resistant to highly correlated errors (also known as error bursts) . This happens because the effect of the errors is stopped when the prediction loop is reset, regardless on how they are dispersed.

By way of direct reference, figure 3 shows an exemplary process of picture partitioning, showing a Group of Picture (GOP) selected out of a video sequence.

Additionally, the possibility is shown of extractions from a given picture one or more slices, each slice being in turn adapted to be partitioned in macroblocks each including 2x2, i.e. four blocks of 8x8 pixels each.

Motion Estimation (ME) is one of the most intensive computational tasks in video encoding.

Perfoming ME on a whole sequence, and then reusing generated motion vectors with proper scaling is a solution which permits a refinement search to be performed in each subsequence.

Portions of the current frame to be encoded are searched in previous (forward prediction) and/or subsequent frames (backward prediction).

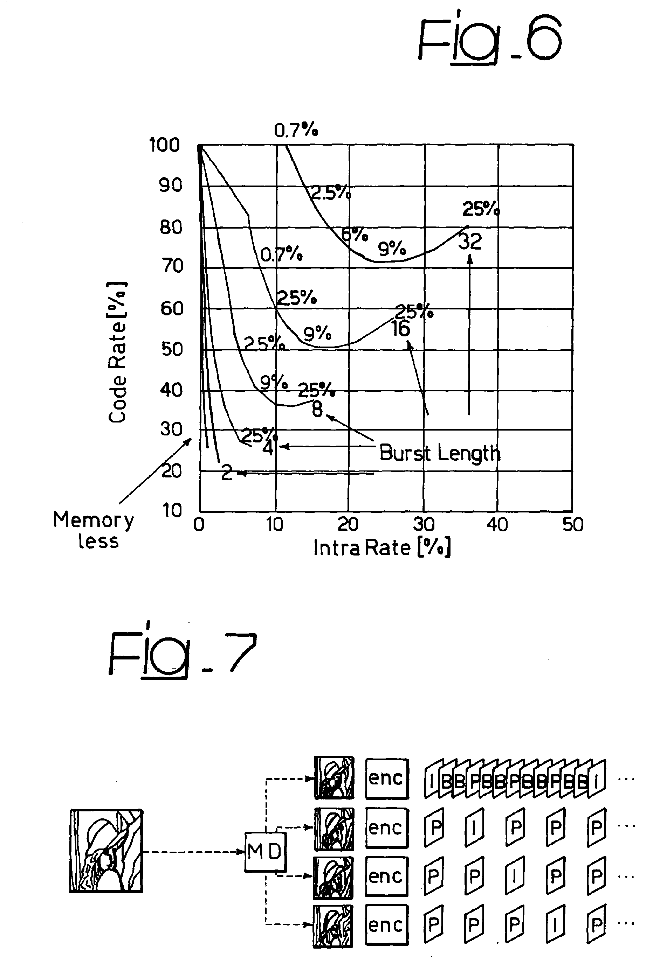

The upper portion of Figure 5 shows an exemplary display order of I (Intra coded), B (Bidirectionally predicted) and P (Predicted) frames.

The lower portion shows an exemplary transmission/coding order for the same frames.

When a good match is found, the prediction is computed and subtracted, i.e. the portion of the current frame is motion compensated (MC), see the summation node 12 in Figure 2. The remaining prediction error is then coded using transform, quantization end entropic coding. If the prediction error is too large, temporal prediction is discarded and spatial prediction (or no prediction at all) is used instead.

Search algorithms are usually based on block matching. Matching is evaluated using a given cost function (such as SAD, Sum of Absolute Differences). The better the match, the lower the prediction error. The simplest search algorithm (known as Full Search) simply tests every possibility (included fractional positions such as 1/2 and 1/4 of pixel sampling interval) and is very low. Faster algorithms exist (e.g. hierarchical search). These test few positions (coarse search) and then refine the estimation. Certain effective algorithms also exploit spatial/temporal correlation of motion vectors (see e.g. US Patents 6,414,997 and 6,456,659) and reuse motion vectors of temporally/spatially adjacent blocks.

Motion estimation for MD subsequences encoding can be greatly simplified. In fact, generally speaking, each subsequence will have lower resolution than the original video sequence. Therefore, estimating the motion at integer pixel positions on the original sequence is the same as estimating the motion at fractional pixel positions without any interpolation.

As an example, when encoding 4 MD generated by spatial polyphase downsampling of 2x2 blocks, ME at integer pixel positions on the original sequence generates motion vectors with 1/2 pixel accuracy with respect to each MD subsequence resolution.

Motion estimation will expectedly be more accurate as the ME block will see the whole sequence, and not just a subsampled/reduced version of it. In fact, in the latter case, local minima of the cost function are likely to generate disordered uncorrelated motion vectors. Due to differential encoding of neighboring motion vectors, this will reduce global coding efficiency.

Finally, it is possible to enhance the error resiliency of the compressed substreams by forcing the correlation of motion vectors of different subsequences. This will facilitate the concealment of lost motion vectors at the decoder side.

Generally speaking, it is better to globally compute encoding decisions and prediction auxiliary signals when encoding MD subsequences. Alternatively, sharing locally computed encoding decisions and prediction auxiliary signals is preferable to using independent encoders.

In MPEG-2, the smallest portion is a block of 16x16 pixels (macroblock). In the H.264 standard, macroblocks can be splitted into two 16x8, two 8x16 or four 8x8 pixels blocks; blocks can be splitted again into two 8x4, two 4x8 or four 4x4 pixels. This is known as a multimode prediction: there are seven prediction modes.

While in MPEG-2 there is only one motion vector per macroblock, in H.264 there can be as many as sixteen motion vectors per macroblock.

In MPEG-2, there is only one previous frame and one future frame for forward and backward prediction. Reference frames can be selected among I-frames (coded with no prediction) or P-frames (coded with forward prediction). In the H.264 standard there can be as many as five previous frames and one future frame. This is known as multiframe prediction. Reference (or anchor) frames can be selected among all decoded frames, whatever the prediction used to code them.

When temporal prediction is not used, there are several spatial predictions that can be selected in H.264: 16x16 luma blocks have nine prediction modes, alternatively four 4x4 luma blocks can be used with four prediction modes; 4x4 chroma blocks may use four prediction modes.

The complexity of motion estimation in H.264 encoder is thirty-five (seven times five) times higher than in the older MPEG-2 encoder. Also, in H.264 encoder there is the complexity of selecting the spatial prediction mode when temporal prediction is not used.

Prediction auxiliary signals (multimode, multiframe, spatial) of each subsequence are temporally and spatially correlated. Hence, it is possible to reduce the complexity of multiple encoding by reusing decisions taken by one of the encoders. Eventually a refinement (small changes) can be tested locally.

Alternatively, such encoding decisions may be taken globally in order to enhance the coding efficiency. This global optimization is analogous to the R-D optimization that can be performed in H.264 for ME/MC: unlike MPEG-2, which only searches for a best match and then codes the prediction error, H.264 searches for a good match that minimizes the number of bits required to code motion vectors and the prediction error.

Specifically, the global encoder of multiple subsequences may choose between optimizing the local quality (e.g. balanced MD coding where each subsequence is encoded with the same quality) or optimizing the average quality (e.g. in unbalanced MD encoding where one subsequence is encoded with higher quality with respect to others).

Figure 6 shows, by way of example, an optimal trade-off (Intra rate vs. code rate) given the probability and the length of error bursts. It turns out that in the presence of longer burst, exploiting the error resiliency of the encoded bitstream is preferable to dedicating bits to FEC. Also, decreasing the code rate (i.e. adding more FEC) at the expense of reduced Intra rate is not advantageous. Conversely, increasing error probabilities are dealt with by increasing Intra rate and by adding more FEC. Moreover, when error probability is high, increase the Intra rate at the expense of FEC codes is advantageous.

The error resiliency of a compressed MD video signal can be enhanced by synchronizing and interleaving non-predicted anchor frames among bitstreams.

The error resiliency may be increased by avoiding prediction, either temporal or spatial, to encode the picture. This happens because unpredicted portions of frame do stop error propagation. This also reduces coding efficiency.

With MD encoding, the error resiliency of compressed video can be enhanced without paying any coding penalty as the unpredicted portions of frames are interleaved.

Such an approach is schematically shown in Figure 7. In MPEG-2 the GOP (Group Of Pictures) always starts with an unpredicted frame, known as I-frame (I stands for Intra coded). All other frames (N-1) in the GOP are predicted: P-frames are forward predicted based on previous P or I-frames; B-frames are bidirectionally predicted based on previous and subsequent P or I frames. Because of the dependence among consecutive P-frames, the last P's in the GOP has a higher probability to be lost. That is: the last frames in the GOP, P and related B-frames, are more likely to be corrupted. This probability is linked to the distance between consecutive I-frames.

When one single description is used and there are G frames in the GOP, the distance between consecutive I-frames is G. When M multiple descriptions are used, the distance between consecutive I-frames is equal to N if I-frames are not offset, but can be reduced to G/M with proper interleaving. The effect of this interleaving will be analyzed considering P-frames (taking into account the dependence of B-frames is generally more difficult).

When one single description is used, the probability to lose the n-th P-frame in the GOP is roughly proportional to (1-pⁿ) (where p<1). When using M multiple descriptions, and I-frames are synchronized, this probability is reduced to (1-pⁿ)^{M}, i.e. the P-frame is lost only if all M P-subframes are lost. When I-frames are optimally interleaved among descriptions, a given P-frame will be the first in one GOP and also will be the last (the N-th) in another GOP. The probability to lose that frame is then the product (1-p¹) (1-p²) ... (1-p^{N}), which is lower than (1-pⁿ)^{M} if n is high enough.

In conclusion, handling of the worst cases (corruption of the last frames in the GOP) is improved. Conversely, handling of the best cases (corruption of first frames in the GOP) is worsened. This reduces the variance of the probability, i.e. all the frames are characterized by roughly the same corruption probability. This is preferable, because a given average quality can be guaranteed for all frames.

Also, proper interleaving of unpredicted anchor frames facilitate the concealment at the decoder side.

The advantage of using multiple description is higher than expected. In fact the error probability for a frame is roughly proportional to the number of bits required for its compressed representation. Therefore, if the aggregate bitrate of the M descriptions is the same as the bitrate for one single description, the probability to lose the n-th P-frame is reduced from (1-pⁿ) to (1- (p/M)ⁿ)^{M}.

The error resiliency of a compressed MD video signal can also be enhanced by synchronizing and interleaving the starting point of slices among bitstreams.

It must be noticed that the smallest independently decodable element in a compressed bitstream is the slice (see Figure 4). In H.264 slices play the role that frames play in MPEG-2: encoding decisions taken at the slice level do restrict possibilities for encoding decisions taken at finer levels (macroblocks, blocks, microblocks), slice are completely independent from each other.

In MPEG-2 the slice is comprised only of macroblocks from a same row. Therefore the only degree of freedom lies in the choice of the horizontal starting point. In H.264 there is additional flexibility, slices can span more than one row, an entire frame may be covered by only one slice. Also, when Flexible Macroblock Order (FMO) is used in H.264, macroblocks in a given slice may be taken in scan order (left-to-right then top-to-bottom), inverse scan order, wipe left (top-to-bottom then left-to-right), wipe right (bottom-to-top then right-to-left), box-out clockwise (center-to-comers in clockwise spiral), box-out counter-clockwise, interspeded (as checkerboard dispersed macroblocks), etc.

Because of the DPCM coding of DC coefficients and of motion vectors relative to consecutive macroblocks in a given slice, the last macroblock in the slice has a higher probability to be corrupted (the reasoning is the same as for MPEG-2 discussed in the foregoing). In practice the DC coefficient of one macroblock is predicted on the basis of the preceding one. This means that the difference is transmitted and the coefficient related to the first macroblock of slice is predicted with respect to 0, and thus transmitted as it is.

Therefore, to reduce the dependence of the error probability on the macroblock order number, offset is the starting point of slices among different descriptions may be preferable.

If slices are not offset, the portion of the frame corresponding to last macroblocks will be always corrupted in case of error-prone transmission. E.g. in MPEG-2, using one slice per row of macroblocks, the right side of the frame will be corrupted with higher probability i.e. it will be "bad".

Thanks to the flexibility of H.264, "bad" sides can be avoided. E.g., in the case of four descriptions, each one may use a different FMO: scan, inverse scan, wipe left and wipe right. If there is one slice per row or column of macroblocks, there will be no "bad" side for the frame. In fact each side will be the starting point for slices in at least one description.

As another example, when interspeded macroblocks are used, the interspeded scheme should be properly varied among descriptions in order to enhance error concealment capabilities at the decoder side.

The wording "interspeded" refers to an image not being subdivided in groups of adjacent blocks. Usually the groups include the macroblocks of one or more lines, and this is why the group is called a "slice" (that is a portion of the image). The possibility exists however of forming a group including sparse blocks, that is blocks that re not adjacent. Such a technique is also known as flexible macroblock order (FMO).

The error resiliency of a compressed MD video signal can also be enhanced by synchronizing and interleaving the intra (not spatially predicted) refresh macroblock policy.

As already indicated, error resiliency may be increased by avoiding prediction, either temporal or spatial, to encode the picture. Instead of taking this decision at a frame level, it is possible to take this decision at a macroblock level. In the latter solution, intra unpredicted anchor frames are not used (except for the very first frame of the sequence). Conversely, each frame is partially refreshed by encoding a certain number of macroblocks as intra, unpredicted macroblocks. A suitable policy must be adopted to guarantee that each macroblock in the frame is refreshed at least once every N frames.

When adopting an intra macroblock refresh policy for the encoding of MD subsequences, a preferred choice is to coordinate the policy so that different portions of the frame are refreshed in different substreams.

As an example, if only one macroblock is refreshed at each frame and there are MB macroblocks, then the entire frame will be refreshed every MB frames. If the refresh policy is coordinated among M descriptions, then the entire frame can be refreshed every MB/M frames. To be more precise, for a given corrupted portion of a given frame, it can be guaranteed that within MB/M frames at least one description will be refreshed.

Therefore error concealment capabilities are enhanced. Possibly, error propagation will be stopped sooner.

Additionally, the error resiliency of a compressed MD video signal can be enhanced at the expense of some coding efficiency by using reduced prediction weights.

In this technique, prediction weights (forward and, eventually, backward) are multiplied by a coefficient that goes from zero to one. When the coefficient is zero, no prediction is actually used. This corresponds to performing prediction at all as the prediction error will be equal to the data itself. When the coefficient is one, the prediction will be completely used (as usual).

This approach is particularly useful as a countermeasure against error propagation due to corrupted anchor frames (this is also known as "drift" due to loss of synchronization between MC loops at encoder and at decoder). The lower the value of the coefficient, the faster the decay of the drift visibility. Coding efficiency will be reduced accordingly.

In fact, this can be seen at least partly as an alternative with respect to intra macroblock refresh policy or intra unpredicted anchor frames. Using the latter techniques, only "hard" decision can be taken: to send data (macroblocks or frames) either with prediction or not. With partial motocompensation a "soft" decision can be taken. The coefficient may be set to any value from zero to one.

For intra, unpredicted anchor frames and intra macroblock refresh policy, globally controlling error resiliency and coding efficiency of each MD subsequence may be preferable.

As an example, a low coefficient may be used in one of the descriptions so that fast recovery from a drift is guaranteed. Possibly, drift due to errors in other descriptions may be concealed.

For balanced MD coding, a suitable policy can be adopted to make the coefficient low for each one of the description in turn (in a round-robin fashion). That policy can be coarse-grained if coefficients are set at a frame level, or fine-grained if coefficients are set at a macroblock level.

Error concealment capabilities can be increased by sharing decoded subframes when decoding multiple compressed descriptions.

When decoding a given compressed substream, a lost anchor frame will yield a noticeable error in the current decoded subframe. Moreover, subsequent decoded frame will suffer from error propagation because of the loss of sync between the MC loops of the encoder and of the decoder.

Error propagation will be greatly reduced if the lost or corrupted anchor frame is concealed by using the corresponding decoded frames from other subsequences. Some residual drift may expected because the concealment will not be perfect.

Classical concealment algorithms may also be applied. As an example the corrupted portion may be copied from previously correctly decoded frames within the same subsequence.

Error concealment capabilities can be increased by sharing motion vectors from decoded MD substreams.

When decoding a given compressed substream, some motion vector may be lost or corrupted. Usually this is concealed by using motion vectors of neighboring or previous blocks. However, concealment will be more effective if corresponding motion vectors from other subsequences are used.

As an example, a median filter can be used to choose among motion vectors available from other subsequences. This is usually done to choose among motion vectors from neighboring and previous macroblocks within the same subsequence.

If independent decoders are used, their concealment capability is limited to a subsequence. They cannot access spatially neighboring and temporally adjacent pixels available in other subsequences.

Accessing such correlated information may increase the effectiveness of the concealment. As an example, edge detection for spatial concealment is more accurate.

The PSNR (Peak Signal-to-Noise Ratio) loss with respect to Single Description Coding is due to the fact that with independent MD encoding (by means of a set of independent encoders) a special kind of artifacts is introduced. When temporal PDMD is used, this artifact can be seen as "flashing": the quality of decoded pictures oscillates noticeably. When spatial PDMD is used, this artifact can be seen as a "checkerboard" pattern on all decoded pictures.

Being special, this kind of artifacts can be identified and (partially) eliminated in the decoded sequence with a suitable post-processing filter. As an example, concerning spatial PDMD, the post-processor filter can eliminate false contours. With joint decoding, it is possible to exploit the knowledge of the quantization step used to code each subsequence. In this case the filter can be adaptive: it can be programmed to eliminate only false contours that are less than the quantization step; contours that are greater should be preserved because they are part of the original data.

Alternatively, this kind of artifacts can be (partially) avoided at encoding time. As an example, concerning spatial PDMD, the choice of the quantization step to be used can be synchronized in order to guarantee that false contours do not appear in the decoded picture. It is of particular importance to make the dequantized level of the first (DC) coefficient of the DCT to be the same for corresponding blocks of all decoded subpictures.

The DC coefficient (first coefficient after DCT) of a given block of a given subsequence is correlated with DC coefficients of corresponding blocks in other subsequences.

Usually the DC coefficient is highly correlated with corresponding DC coefficients. Therefore the use of offset quantizers may help the decoder in reducing the quantization error of the decoded DC coefficient.

In fact, when offset quantizers are used, it can be assumed that the same DC coefficient is quantized multiple times in a slightly different manner. This results in slightly different dequantized coefficients. The decoder can then take the mean of the dequantized coefficients to get a higher precision representation. This technique can be seen as dithering applied to DC coefficient, because the same DC coefficient is quantized multiple times. Alternatively, it can be seen as "multiple description" in the SNR space because the higher the number of descriptions, the less the quantization error for the DC coefficient, the higher the SNR (Signal-to-Noise Ratio).

Thanks to the high correlation with corresponding DC coefficients, the filtering operation needed to remove MD artifacts can be done in the transform domain.

As an example, for the case of spatial PDMD, decoded DC coefficients of spatially corresponding blocks in all descriptions, can be forced -to be equal to a given value, that in turn can be computed as the average of the decoded DC coefficients.

This "smoothing" of DC coefficients, reduces the visibility of the checkerboard pattern introduced by spatial PDMD.

The same operation can be done when temporal PDMD is used. In this case DC coefficients of temporally corresponding blocks are averaged, then the average is substituted in all descriptions.

This helps reducing the flashing pattern introduced by temporal PDMD.

Consequently, without prejudice to the underlying principle of the invention, the details and embodiments may vary, also significantly, with respect to what has been described and shown by way of example only, without departing from the scope of the invention as defined by the annexed claims.

## Claims

1. A method for encoding a video signal sequence (I) by generating therefrom multiple description subsequences wherein said subsequences are produced by a plurality of parallel video encoding processes (102) based on respective encoding parameters, the method including the step of commonly controlling (103) said encoding parameters for said plurality of video encoding processes (102).

2. The method of claim 1, **characterized in that** the video signal resulting from said encoding has a target bitrate and wherein said respective encoding parameters include said target bitrate.

3. The method of claim 1, **characterized in that** said video signal (I) subject to encoding has a group of picture (GOP) structure and wherein said respective encoding parameters include said GOP structure.

4. The method of claim 1, **characterized in that** said video signal (I) subject to encoding has a slice partitioning and wherein respective encoding parameters include said slice partitioning.

5. The method of claim 1, **characterized in that** said subsequences are produced by a plurality of parallel independent video encoding processes (102).

6. The method of claim 1, **characterized in that** said subsequences are produced by multiple parallel dependent video encoding processes (102).

7. The method of claim 6, **characterized in that** it includes the step (18) of creating dependency among said multiple parallel dependent encoding processes (102) by at least one of data sharing and signalling.

8. The method of claim 7, **characterized in that** it includes the step (32b) of producing anchor frames in said video signal (I) subject to encoding and the step (32) of creating dependency among said multiple parallel dependent encoding processes (102) via selection of said anchor frames.

9. The method of claim 7, **characterized in that** it includes the step (32) of producing motion vectors in said video signal (I) subject to encoding and the step (38) of creating dependency among said multiple parallel dependent encoding processes (102) via selection of said motion vectors.

10. The method of claim 7, **characterized in that** it includes the step (12) of applying prediction mode to said video signal (I) subject to encoding by using prediction weights, and the step of creating dependency among said multiple parallel dependent encoding processes (102) by globally controlling said prediction weights for said multiple description subsequences.

11. The method of claim 1, **characterized in that** it includes the step of providing one custom video encoder able to accept said video sequence as input and generate said subsequences as multiple description bitstreams conformant to a video standard.

12. The method of claim 1, **characterized in that** it includes the step (32b) of performing motion compensation on the whole of said video sequence (I), thus generating motion vectors and the step (38) of refining and adapting said motion vectors for encoding each subsequence.

13. The method of claim 1, **characterized in that** it includes the step (30) of producing auxiliary prediction signals and coding decisions on the whole among said subsequences of said sequence, and the step (12) of sharing said signals and decisions to reduce the complexity of encoding each subsequence.

14. The method of claim 1, **characterized in that** it includes the step (32b) of selecting anchor frames in a coordinate manner on the whole of said sequence for enhancing the overall error resiliency of said subsequences.

15. The method of claim 1, **characterized in that** it includes the step of subjecting said sequence as a whole to slice partitioning to enhance the overall error resiliency of said subsequences.

16. The method of claim 1, **characterized in that** it includes the step of subjecting said video sequence as a whole to an unpredicted macroblock refresh policy on the whole sequence for enhancing the overall error resiliency of said subsequences.

17. The method of claim 1, **characterized in that** it includes the step of choosing prediction weights on said sequence as a whole in order to reduce the error propagation in each decompressed subsequence.

18. A method for decoding a video signal sequence encoded in the form of multiple description subsequences wherein said subsequences are decoded by a plurality of parallel video decoding processes (104) based on respective decoding parameters, the method including the step (105) of commonly controlling said decoding parameters for said plurality of video decoding processes (104).

19. The method of claim 18, **characterized in that** said subsequences are decoded by a plurality of parallel independent video decoding processes (104).

20. The method of claim 18, **characterized in that** said subsequences are decoded by multiple parallel dependent video decoding processes (104).

21. The method of claim 20, **characterized in that** it includes the step (40) of creating dependency among said multiple parallel dependent decoding processes (104) by at least one of data sharing and signalling.

22. The method of claim 21, **characterized in that** said subsequences includes anchor frames, wherein the method includes the step (60) of creating dependency among said multiple parallel dependent decoding processes (104) via said anchor frames.

23. The method of claim 22, **characterized in that** said subsequences include motion vectors, the method including the step (46) of creating dependency among said multiple parallel dependent decoding processes (104) via selection of said motion vectors.

24. The method of claim 22, **characterized in that** said subsequences convey intra/inter prediction modes (62/60) of said video signal, the method including the step of creating dependency among said multiple parallel dependent decoding processes (104) via selection of said intra/inter (62/60) prediction modes.

25. The method of claim 18, **characterized in that** it includes the step of providing one custom video decoder able to accept as input said plurality of subsequences as multiple description bitstreams conformant to a video standard and generate one video sequence.

26. The method of claim 18, **characterized in that** decoding said video signal includes a concealment algorithm, wherein said respective decoding parameters include said concealment algorithm.

27. The method of claim 26, **characterized in that** it includes the step of recovering lost and/or corrupted anchor frames from other decompressed subsequences in order to enhance error concealment capabilities.

28. The method of claim 26, **characterized in that** it includes the step of recovering lost and/or corrupted motion vectors from any of said decoded subsequences in order to enhance error concealment capabilities.

29. The method of claim 20, **characterized in that** it includes the step of accessing correlated data present in any of decoded subsequences in order to enhance error concealment capabilities.

30. An encoder system for encoding a video signal sequence by generating therefrom multiple description subsequences, the system including a plurality of parallel video encoders (102), each said encoder producing a respective one of said subsequences, based on respective encoding parameters, the system further including a common controller (103) adapted for commonly controlling said encoding parameters for said encoders of said plurality.

31. The system of claim 30, **characterized in that** the video signal resulting from said encoding system having a target bitrate, and wherein said respective encoding parameters include said target bitrate.

32. The system of claim 30, **characterized in that** said video signal subject to encoding has a group of picture (GOP) structures, and wherein said respective encoding parameters included said GOP structure.

33. The system of claim 30, **characterized in that** said video signal subject to encoding has a slice partitioning and wherein said respective encoding parameters included said slice partitioning.

34. The system of claim 30, **characterized in that** it includes a plurality of parallel independent video encoders (102).

35. The system of claim 30, **characterized in that** it includes a single encoder adapted to run multiple parallel dependent video encoding processes.

36. The system of claim 35, **characterized in that** it includes at least one module (18) for creating dependency among said multiple parallel dependent encoding processes by at least one of data sharing and signalling.

37. The system of claim 36, **characterized in that** it includes at least one anchor module (32) for producing anchor frames in said video signal subject to encoding and at least one dependency module for creating dependency among said multiple parallel dependent encoding processes (102) via selection of said anchor frames.

38. The system of claim 36, **characterized in that** it includes at least one motion estimation module (32a) for producing motion vectors in said video signal subject to encoding and at least one dependency module for creating dependency among said multiple parallel dependent encoding processes (102) via selection of said motion vectors.

39. The system of claim 36, **characterized in that** it includes at least one prediction module (30 or 32) for producing intra/inter prediction modes in said video signal subject to encoding and at least one dependency module for creating dependency among said multiple parallel depending encoding processes (102) via selection of said intra/inter prediction modes.

40. The system of claim 30, **characterized in that** it includes at least one custom video encoder able to accept a video sequence as input and generate said plurality of subsequences as multiple description bitstreams conformant to a video standard.

41. The system of claim 30, **characterized in that** it includes at least one motion compensation module (32b) for performing motion compensation on the whole of said video sequence, and then refining and adapting the motion vectors for encoding each subsequence.

42. The system of claim 30, **characterized in that** it includes at least one prediction (30 or 32) and coding module for producing auxiliary prediction signal and coding decisions on said sequence as a whole, and wherein said prediction signals and coding decisions are shared in said parallel video encoders (102) to reduce the complexity of encoding each said subsequence.

43. The system of claim 30, **characterized in that** it includes at least one anchor selection module for selecting anchor frames on said sequence as a whole for enhancing the overall error resiliency.

44. The system of claim 30, **characterized in that** it includes a coordination module for coordinating slice partitioning of said sequence as a whole for enhancing the overall error resiliency.

45. The system of claim 30, **characterized in that** it includes at least one refresh module for coordinating an intra macroblock (32b) refresh policy over said sequence as a whole weight for enhancing the overall error resiliency.

46. The system of claim 30, **characterized in that** it includes at least one a selection module for choosing prediction weights on said sequence as a whole in order to reduce the error propagation in each said subsequence.

47. A decoder system for decoding a video signal sequence encoded in the form of multiple description subsequences, the system including a plurality of parallel video decoders (104), each said decoder decoding a respective one of said subsequences based on respective decoding parameters, the system further including a common controller (105) adapted for commonly controlling said decoding parameters for said decoders of said plurality.

48. The system of claim 47, **characterized in that** it includes a plurality of parallel independent video decoders (104).

49. The system of claim 47, **characterized in that** it includes a single decoder adapted to run multiple parallel dependent video decoding processes.

50. The system of claim 49, **characterized in that** it includes at least one dependency module for creating dependency among said multiple parallel dependent decoding processes (104) by at least one of data sharing and signalling.

51. The system of claim 50, **characterized in that** said video signal subject to decoding includes anchor frames and wherein the system includes at least one dependency module for creating dependency among said multiple parallel dependent decoding processes (104) via selection of said anchor frames.

52. The system of claim 50, **characterized in that** said video signal subject to decoding includes motion vectors and wherein the system includes at least one dependency module for creating dependency among said multiple parallel dependent decoding processes (104) via selection of said motion vectors.

53. The system of claim 50, **characterized in that** said video signal subject to decoding is subject intra/inter prediction modes (62 or 60) and wherein the system includes at least one dependency module for creating dependency among said multiple parallel dependent decoding processes (104) via selection of said intra/inter prediction modes.

54. The system of claim 47, **characterized in that** it includes at least one custom video decoder able to accept as input said plurality of subsequences as multiple description bitstreams conformant to a video standard and generate one video sequence.

55. The system of claim 47, **characterized in that** the system is configured for running at least one concealment algorithm, and wherein said respective decoding parameters include said concealment algorithm.

56. The system of claim 47, **characterized in that** it includes at least one recovery module for recovering lost and/or corrupted anchor frames from any of said subsequences in order to enhance error concealment capabilities.

57. The system of claim 47, **characterized in that** it includes at least one recovery module for recovering lost and/or corrupted motion vectors from any of said subsequences in order to enhance error concealment capabilities.

58. The system of claim 47, **characterized in that** it includes at least one access module for accessing correlated data present in any of said subsequences in order to enhance error concealment capabilities.

59. A computer program product loadable in the memory of at least one computer and including software code portions for performing the method of any of claims 1 to 17 when the product is run on a computer.

60. A computer program product loadable in the memory of at least one computer and including software code portions for performing the method of any of claims 18 to 29 when the product is run on a computer.
